# EUROPEAN PATENT SPECIFICATION

(11) **EP 4 621 757 B1**
(45) Date of publication and mention of the grant of the patent: **30.09.2026**
(21) Application number: 25162370.8
(22) Date of filing: 07.03.2025
(51) Int. Cl.: G09B 19/00

(54) **MANAGING MODULE AND METHOD FOR MANAGING A CAPTURED TRACE OF A GOLF BALL**
VERWALTUNGSMODUL UND VERFAHREN ZUR VERWALTUNG EINER ERFASSTEN SPUR EINES GOLFBALLS
MODULE DE GESTION ET PROCÉDÉ DE GESTION D'UNE TRACE CAPTURÉE D'UNE BALLE DE GOLF

(30) Priority: 22.03.2024 US 202463568994 P
(43) Date of publication of application: 24.09.2025
(73) Proprietor: Topgolf Sweden AB, 182 33 Danderyd (SE)
(72) Inventor: Riddersporre, Johan, 14652 Tullinge (SE)
(74) Representative: Noréns Patentbyrå AB

(56) References cited:
- US-A1- 2021 220 718
- US-A1- 2022 233 942

## Description

### BACKGROUND OF THE INVENTION

### Field of the Invention

The embodiments herein generally relate to managing of traces of sports projectiles, such as golf balls or the like. In particular, a method and a managing module for managing a captured trace of a golf ball are disclosed. Furthermore, a related computer program and a carrier therefor are also disclosed.

### Description of the Related Art

Golf can be practiced in different environments, such as on a golf course, at an indoor or outdoor driving range, in a golf game, in which the golfer e.g. plays a virtual golf round on a selected golf course, or the like. Sometimes, the golf balls that are used in e.g. the aforementioned different environments can have different physical properties. For example, a golf range ball, that can be used on a driving range, or in a game, but typically not on an golf course, often does not have the same characteristics as a premium golf ball. This can mean that the flight of the golf range ball can often be a bit shorter than that of the premium golf ball.

A difference between the golf range ball and the premium ball can be that a golf range ball can have a construction of only 1 or 2 pieces whereas the premium ball can have e.g. 3-5 layers. Another difference relates to the compression and/or dimple pattern of the golf balls. Further, the cover, or the outer layer, of a range ball is usually much harder than the cover of a premium golf ball, whereby the range ball better withstand the wear and tear that the range ball is expected to be exposed to.

There are also so-called flight restricted range balls that have dimple patterns and changed weight that affects the distance the ball travels when shot. This way the range ball does intentionally not fly as far as without such flight-restriction. This can improve safety by that golf players will be less prone to hit the golf balls out of the driving range, e.g. at least in a length direction of the driving range. These types of balls are often rates with 10-20% flight restriction, meaning that they travel 10-20% shorter than a premium golf ball would for the same shot.

For golfers, it is crucial to know how far they hit a golf ball. So, for example, when the golfers use a non-premium ball, such as a range ball, the golfer is interested in how far a golf shot, with the non-premium ball, would have been using a premium ball.

Known so called golf tracing equipment, such as tracers, or the like, assist golfers with information about how far the golf ball was shot. In this manner, the golfers can receive valuable feedback on how to improve their skills. However, e.g. when golfers use range balls e.g. in a game, the feedback can be misleading. Therefore, to adjust the distance, it is known to linearly scale of the length of the shot. E.g. if there is a 10% flight restricted range ball, the length in the system will provide both the original non-scaled length, and a length that will be scaled so the 10% restriction is removed, i.e. by dividing the non-scaled length by 90%. An exemplary system of the prior art to calculate golf ball trajectories is disclosed in US2021220718 A1.

### BRIEF SUMMARY OF THE INVENTION

The invention is defined by the appended claims 1-15. According to an aspect, the object is achieved by a method, performed by a managing module, for managing a captured trace of a golf ball. The managing module obtains a set of shot parameters relating to a shot of the golf ball represented by the captured trace, e.g. a type of the golf ball, such as range ball, premium ball, or the like. The managing module selects at least one transformation function from among a plurality of transformation functions based on: a set of ball parameters relating to physical properties of the golf ball, e.g. associated with the captured trace, the set of shot parameters, and a plurality of intervals related to the set of shot parameters. Each transformation function of the plurality of transformation functions is associated with a respective interval for at least one of the shot parameters, i.e. of the set of shot parameters, and with at least one respective ball parameter of the set of ball parameters. The plurality of intervals comprises the respective interval for each transformation function. This means that the managing module can select from different transformation functions for different traces, e.g. even if the ball parameters are the same for the different traces. The managing module transforms the captured trace according to said at least one transformation function to obtain a transformed trace. Next, the managing module provides the transformed trace for outputting on a display device.

In this manner, the captured trace can be transformed according to the set of ball parameters while selecting the transformation function(s) to use for the transformation based on the set of shot parameters associated, e.g. obtained for, the captured trace, and the related plurality of intervals. As a result, the transformed trace is more accurately reflecting a trace for a golf ball with a different set of ball parameters, e.g. a premium ball instead of a range ball. An advantage is hence that accuracy and/or user-experience can be improved.

In some embodiments, the transformation of the captured trace comprises calculating the transformed trace based on a respective transformed trace for each transformation function of said at least one transformation function.

In some embodiments, the transformation of the trace comprises calculating the transformed trace as an average, a weighted average, a min, a max, and/or a median of the respective transformed trace for said each transformation function.

In some embodiments, a sub-group of the plurality of intervals is associated with one of the shot parameters, wherein the intervals of the sub-group are consecutively following each other.

In some embodiments, two adjacent points of two consecutive intervals of the plurality of intervals, one of the points belonging to one of the two consecutive intervals and the other point belonging to the other one of the two consecutive intervals, are constrained by a condition that the values of the transformation functions match.

In some embodiments, two adjacent points of two consecutive intervals of the plurality of intervals, one of the points belonging to one of the two consecutive intervals and the other point belonging to the other one of the two consecutive intervals, are constrained by a condition that the derivate values of the transformation functions match.

In some embodiments, the providing of the transformed trace comprises sending the transformed trace to the display device, thereby presenting a graphical representation of the golf shot.

In some embodiments, the set of ball parameters comprises at one or more of: a type of the golf ball, a dimple pattern of the golf ball, an indication about compression properties of the golf ball, a cover material of the golf ball, a weight of the golf ball, and a size of the golf ball.

In some embodiments, the transformation function comprises a scaling function.

In some embodiments, the method comprises obtaining the plurality of transformation functions.

In some embodiments, the method comprises obtaining the set of ball parameters.

In some embodiments, the method comprises obtaining the captured trace.

In some embodiments, the obtaining of the set of shot parameters comprises capturing, by a camera, the shot to obtain the set of shot parameters by use of image analysis.

According to another aspect, the object is achieved by a managing module configured for managing a captured trace of a golf ball. The managing module is configured for obtaining a set of shot parameters relating to a shot of the golf ball represented by the captured trace. The managing module is configured for selecting at least one transformation function from among a plurality of transformation functions based on: a set of ball parameters relating to physical properties of the golf ball, the set of shot parameters, and a plurality of intervals related to the set of shot parameters. Each transformation function of the plurality of transformation functions is associated with a respective interval for at least one of the shot parameters, and with at least one respective ball parameter of the set of ball parameters. The plurality of intervals comprises the respective interval for each transformation function. The managing module is configured for transforming the captured trace according to said at least one transformation function to obtain a transformed trace. The managing module is further configured for providing the transformed trace for outputting on a display device.

In some embodiments, the managing module is configured for transforming the captured trace by calculating the transformed trace based on a respective transformed trace for each transformation function of said at least one transformation function.

In some embodiments, the managing module is configured for transforming the captured trace by calculating the transformed trace as an average, a weighted average, a min, a max, a median, and/or the like, of the respective transformed trace for said each transformation function.

In some embodiments, a sub-group of the plurality of intervals is associated with one of the shot parameters, wherein the intervals of the sub-group are consecutively following each other.

In some embodiments, two adjacent points of two consecutive intervals of the plurality of intervals, one of the points belonging to one of the two consecutive intervals and the other point belonging to the other one of the two consecutive intervals, are constrained by a condition that the values of the transformation functions match, such as are equal.

In some embodiments, two adjacent points of two consecutive intervals of the plurality of intervals, one of the points belonging to one of the two consecutive intervals and the other point belonging to the other one of the two consecutive intervals, are constrained by a condition that the derivate values of the transformation functions match, such as are equal.

In some embodiments, the managing module is configured for providing the transformed trace by sending the transformed trace to the display device, thereby presenting, e.g. to a viewer/user, a graphical representation of the golf shot.

In some embodiments, the set of ball parameters comprises at one or more of: a type of the golf ball, a dimple pattern of the golf ball, an indication about compression properties of the golf ball, a cover material of the golf ball, a weight of the golf ball, a size of the golf ball, or the like.

In some embodiments, the transformation function comprises a scaling function, such as a constant or varying function, or the like.

The managing module can be configured for obtaining the plurality of transformation functions.

The managing module can be configured for obtaining the set of ball parameters.

The managing module can be configured for obtaining the captured trace, e.g. from a tracing module, or the like.

The managing module can be configured for obtaining the set of shot parameters by capturing, by a camera, the shot to obtain the set of shot parameters by use of image analysis.

According to further aspects, there is provided a related computer program and a computer program carrier, or carrier for short, carrying the computer program.

Having briefly described the present invention, the above and further objects, features and advantages thereof will be recognized by those skilled in the pertinent art from the following detailed description of the invention when taken in conjunction with the accompanying drawings.

### BRIEF DESCRIPTION OF THE SEVERAL VIEWS OF THE DRAWINGS

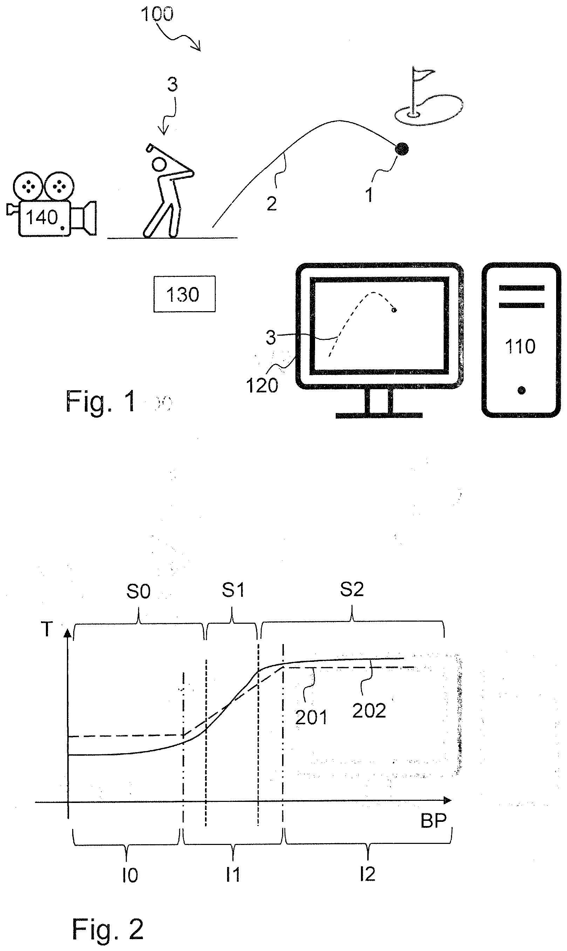

FIG. 1 is a perspective view of the invention.
Figure 1 is an overview of a system, in which the embodiments herein can be implemented.
Figure 2 is a diagram illustrating examples relating to the transformation functions.
Figure 3 is a flow chart illustrating examples of the method herein.
Figure 4 is a block diagram illustrating examples of the managing module.

### DETAILED DESCRIPTION OF THE INVENTION

As shown in FIG. 1.

Figure 1 is a schematic overview of a system 100 in which the embodiments herein can be implemented.

The system 100 comprises a managing module 110, such as a computer, a cloud function, a computer program executing on virtual and/or physical hardware and/or a virtual execution environment, or the like. The managing module 110 can be configured to perform the embodiments of the method herein.

The system 100 can comprise a display device 120, such as a screen, a monitor, a projector, a computer screen, or the like. The display device 120 can be communicatively connected to the managing module 110, e.g. to be able to display information provided by the managing module 110.

The system 100 can comprise a tracing module 130, such as a so called tracer, a ball tracer, a ball tracing unit, a tracker, or the like. Various tracing modules are known in the related art. The tracing module 130 can include one or more of a video camera, a radar, a high-speed camera, a lidar, or the like.

The system 100 can comprise a launch monitor 140, e.g. including a video camera, a radar, a lidar, high-speed cameras and/or the like. Various launch monitors are known in the art.

Figure 1 further illustrates that a golf ball 1 travels along a captured trace 2. That is to say, the captured trace 2 has been captured by the tracing module 130, e.g. by picking up images of a shot made by a golfer 3, such as a person, a robot, a human or the like. Accordingly, the tracing module 130 can include, or be connected to, one or more cameras (not shown).

According to one example, the golfer 3 hits golf balls on a driving range, in a game, or the like. The golf balls at the driving range, or for use in the game, can typically be a special kind of golf ball, that for example does not yield as long shots as a premium ball, e.g. used in tournaments, tours, on a golf course, or the like. This special kind of golf balls can be range balls, aka golf range balls.

Therefore, when the golfer 3 reviews the captured trace 2 on e.g. the display device 120, the shot can for example appear as shorter than it would have been, had the shot been performed with a premium ball. In general, if the practicing in the game or driving range is done with other types of golf balls than those used when playing a game on a golf course, there will be a difference between the trace obtained for the game or driving range and a trace obtained at the golf course. This means that the golfer 3 can get faulty or misleading information about their performance.

In view of the above, a problem can be that the golfer 3 does not get accurate information about the trace of the golf ball 1. This problem can be reduced, or even eliminated, with the embodiments of the method described herein.

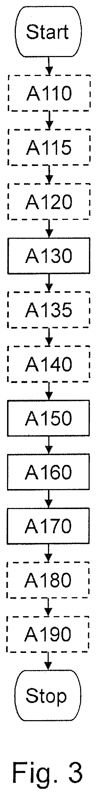

Accordingly, Figure 3 illustrates examples of a method for managing a captured trace 2 of a golf ball 1. The method can be performed by the managing module 110, the system 100, or the like.

One or more of the following actions can be performed in any suitable order. In this example, the method is described as being performed by the managing module 110.

### Action A110

The managing module 110 can obtain a set of ball parameters. In a simple example, the set of ball parameters includes, e.g. only, a range ball indication indicating whether the golf ball used is a range ball or a premium ball. As an example, when the range ball indication has a value of true, it can mean that a golf range ball is used, and false would thus mean that a golf range ball is not used, whereby it will be assumed that it is a premium ball, or other non-range ball. The range ball indication can be used to activate or de-activate transformation of the captured trace 2.

The set of ball parameters can comprise one or more of: a type of the golf ball 1, e.g. a premium ball, a range ball, a golf ball of a certain brand, or the like, i.e. similarly to the range ball indication; a dimple pattern of the golf ball 1; an indication about compression properties of the golf ball 1; a cover material of the golf ball 1; a weight of the golf ball 1, a size of the golf ball 1; and the like.

The dimple pattern relates to any one or more of position of depressions, number of depressions, shape of the depressions, depth of the depressions, or the like, on the golf ball's 1 surface. The indication about compression relates to the extent of compression, e.g. elastic change of shape, that the golf ball undergoes when being hit by a golf club. The cover material can relate to the hardness of the cover, or shell, of the golf ball 1, and/or the type or name of the material used.

It may be noted that golf balls typically have the same size and weight, e.g. within certain margins, but there can be special cases where the weight and/or size can be different for various purposes, such as for fun, for practicing, for safety etc. There can also be rules that specify the limits of various properties of the golf balls, including size and weight, but also dimple pattern, cover material, and/or more.

The set of ball parameters can be obtained from a memory accessible by the managing module 110, i.e. the set of ball parameters can be predefined. However, the set of ball parameters can be received from input by a user, such as a golfer, an operator, or the like. When the set of ball parameters is input by the user, it can be sufficient for the user to input e.g. "range ball", but more specific details according to the set of ball parameters could possibly be input, yet less convenient. If the managing module 110 has access to data about various golf ball manufacturer's data, e.g. in terms of the aforementioned ball parameters, about their balls, it could be possible for the user to input the manufacture name, such as a brand, and optionally a model name, whereby the user supplies the set of ball parameters to the managing module 110. That is to say, the managing module 110 can perform a look up in the manufacturer's data to obtain the set of ball parameters, a plurality of transformation functions and related intervals, to use, e.g. as part of action A140 below.

### Action A120

The managing module 110 can obtain a captured trace 2, e.g. from a tracing module 130, or the like. The captured trace 2 can be derived from a set of images at and shortly after launch of the golf ball 1. This is known in the art for example in the case of an indoor driving range, where the golfer shots the ball into a net, but the golfer can view a trace as if the golf ball was shot on a golf course, e.g. toward a hole. Sometimes, the captured trace 2 can be generated from a series of images depicting the golf balls path from launch until it stops. This can be the case when the golfer 3 practices on a typical outdoor driving range.

### Action A130

The managing module 110 obtains a set of shot parameters relating to a shot of the golf ball 1 represented by the captured trace 2.

The set of shot parameters can comprise, such as include, be listed as, or the like, one or more of: a speed of the golf ball 1, e.g. at launch thereof, a spin of the golf ball 1, e.g. at launch thereof, a launch angle of the golf ball 1, or the like.

Therefore, in a simple example, the managing module 110 can obtain information about the speed of the golf ball 1, i.e. the speed of the golf ball 1 at launch thereof.

The managing module 110 can for example calculate one or more of the shot parameters of the set of shot parameters based on the captured trace 2, and/or the managing module 110 can obtain the shot parameters from a launch monitor as explained below.

### Action A135

The managing module 110 may capture, by a launch monitor 140, the shot to obtain the set of shot parameters by use of image analysis, e.g. performed by the launch monitor 140. This means that action A130 can include action A135. The launch monitor 140 can be comprised in the managing module 110, or the launch monitor can be a separate from the managing module 110.

Furthermore, this means that the set of shot parameters can be obtained, by the managing module 110, from the launch monitor 140, comprising, e.g. connected to, incorporated with, or the like, a camera, etc. as exemplified above.

### Action A140

The managing module 110 may obtain a plurality of transformation functions. The transformation function can comprise a scaling function, such as a constant or varying function, or the like. The transformation function can be any function defined in one or more intervals for one or more of the shot parameters. The transformation function can thus be a constant function, a linear function, a linear increasing function, a linear decreasing function, a polynomial function, a spline function, a logarithmic function, an exponential function, or the like.

Each transformation function of the plurality of transformation functions is associated with a respective interval for at least one of the shot parameters, i.e. of the set of shot parameters, and with at least one respective ball parameter of the set of ball parameters. The plurality of intervals comprises the respective interval for each transformation function. As an example, at least one of the shot parameters is associated with at least two intervals, where a first transformation function is used in one of the two intervals and a second transformation function is used in the other one of the two intervals. The first and second transformation functions are different, e.g. different constant scaling as in Table 1, see I0 and I2.

In one example, the following intervals have been defined for ball speed, where ball speed is taken as an example of a shot parameter, and range ball is taken as an example of a ball parameter, i.e. indicating that the golf ball 1 that was shot is a range ball.

**Table 1**

| Lower limit, ball speed | Upper limit, ball speed | Transformation function | Ball parameter |
|---|---|---|---|
| 0 mph | 75 mph | 0% (constant) | Is range ball |
| 75 mph | 95 mph | Interpolate function, e.g. linear | Is range ball |
| 95mph | 125 mph | 5% (constant) | Is range ball |
| 125 mph | 140 mph | Interpolate function, e.g. linear | Is range ball |
| 140 mph | "infinity"/max speed | 7.5% (constant) | Is range ball |
| Mph = miles per hour | | | |

In view of the table above, the transformation function to be used when transforming the captured trace 1 into a transformed trace 3 thus depends on the speed of the golf ball 1, e.g. for the shot under observation, and whether or not the ball used is a range ball or not. For simplicity, cases when the ball parameter does not indicate that it is a range ball has been left out, because then no transformation is done in this example.

According to the example above, no transformation of the captured trace, i.e. 0%, is done when the speed of the golf ball is less than 75 mph, but for the ranges 95-125 mph and above 140 mph a constant scaling of 5% and 7,5%, respectively, is applied. Further, as an example a linear interpolation for the scaling can be applied between 75 and 95 mph, i.e. linearly interpolated scaling factor ranges from 0% to 5%. Similarly, the scaling factor to use between 125 and 140 mph can be linearly interpolated as being from 5% to 7.5%. Of course, a linearly interpolated scaling corresponds to that a linear function is used as the transformation function. With reference to Figure 2, e.g. a graph 201 can illustrate how an interval I1 can represent an interpolation between a preceding interval I0 and a subsequent interval I2. So, in the interval i1 a linear function is used as the transformation function. The intervals S0, S1, and S2 shows another example, where e.g. spline functions are defined for different intervals.

A sub-group of the plurality of intervals can be associated with one of the shot parameters. The intervals of the sub-group can be consecutively following each other. In this manner, it can be ensured that for any shot parameter, a particular transformation function will be available for use. Sometimes, it can be that the particular transformation function is a linear or non-linear interpolation between two intervals at a respective side of the interval under observation. See example in Figure 2.

Two adjacent points of two consecutive intervals of the plurality of intervals, one of the points belonging to one of the two consecutive intervals and the other point belonging to the other one of the two consecutive intervals, can be constrained by a condition that the values of the transformation functions match, such as are equal, or the like. In this manner, unexpected discontinuities of the transformation of the captured trace can be avoided. This is illustrated by the intervals I0-I2 in Figure 2.

Two adjacent points of two consecutive intervals of the plurality of intervals, one of the points belonging to one of the two consecutive intervals and the other point belonging to the other one of the two consecutive intervals, are constrained by a condition that the derivate values of the transformation functions match, such as are equal, or the like. In this manner, smoothness the transformation of the captured trace can be ensured at the borders between two consecutive intervals. This is illustrated by the intervals S0-S2 in Figure 2.

### Action A150

In view of the above, the managing module 110 selects at least one transformation function from among a plurality of transformation functions based on: the set of ball parameters relating to physical properties of the golf ball 1, e.g. associated with the captured trace 2; the set of shot parameters; and the plurality of intervals related to the set of shot parameters.

With reference to table 1 above, the set of ball parameters can indicate that the golf ball 1 in use is a range ball. This thus means that it can be that a transformation shall be applied.

As an examples, the obtained set of shot parameters can include that the speed, i.e. the launch speed, of the golf ball 1 is known e.g. from calculation based on the captured trace 2 and/or from the launch monitor as explained above. Further, the plurality of interval can be the intervals defined for the speed in Table 1. Then, the managing module 110 can select the transformation function, e.g. the scaling factor, or the interpolated scaling factor to use.

### Action A160

The managing module 110 transforms the captured trace 2 according to said at least one transformation function to obtain a transformed trace 3.

The managing module 110 can perform the transformation A160 of the captured trace 2 by calculating the transformed trace 3 based on a respective transformed trace 3 for each transformation function of said at least one transformation function.

As an example, assume that the set of shot parameters includes e.g. speed and launch angle. It can then be that a first set of transformation functions are defined for a plurality of intervals of the speed. Further, it can be that a second set of transformation functions are defined for a plurality of intervals of the launch angle. In this example, the managing module 110 can then obtain a respective transformed trace, i.e. one transformed trace, aka a first transformed trace, for the speed using one of the transformation functions of the first set of transformation functions and another transformed trace, aka a second transformed trace, for the launch angle using one of the transformation functions of the second set of transformation functions. Next, the managing module 110 can merge the first and second transformed traces, e.g. by calculating an average thereof, or the like as indicated below.

Therefore, the managing module 110 can perform the transformation of the captured trace by calculating the transformed trace 3 as an average, a weighted average, a min, a max, a median, and/or the like, of the respective transformed trace 3 for said each transformation function.

In other examples, action A150 can be performed by that the transformation function, e.g. one transformation function, is selected based on e.g. two shot parameters and intervals associated therewith. More generally, the managing module 110 can select the transformation function as a function of the set of shot parameters and the plurality of intervals.

**Table 2**

| Speed\launch angle | 0-30 degrees | > 30 degrees |
|---|---|---|
| 0-60 mph | F1 | F2 |
| > 60 mph | F3 | F4 |

F1, F2, F3 and F3 denote a respective transformation function.

When applying the information from Table 2 in action A150, the managing module 110 can thus select one of the transformation functions F1-F4 based on the speed and the launch angle of the shot under observation, e.g. the shot for which a captured trace has been obtained. This means that the managing module 110 selects only one transformation function, but the selection is done while taking a plurality of shot parameters into account and a plurality of intervals related to those shot parameters.

As a further example, with reference to Table 3, action A150 can be performed by that the managing module takes two or more ball parameters into account, e.g. in addition to one or more shot parameters, when selecting the transformation function. In the example below, the ball parameters can be the dimple pattern and the compression indication.

**Table 3**

| Speed\ball parameter | Dimple pattern1 | | Dimple pattern2 | |
|---|---|---|---|---|
| | Comp interval1 | Comp interval2 | Comp interval1 | Comp interval2 |
| 0-60 mph | F5.1 | F5.2 | F6.1 | F6.2 |
| > 60 mph | F7.1 | F7.2 | F8.1 | F8.2 |

As a further example, e.g. as a combination of e.g. the examples of Table 2 and Table 3, the managing module 110 can select the transformation function(s) based on two or more ball parameters, two or more shot parameters, and the related plurality of intervals.

In view of the examples above, it can therefore be understood that, according to various examples, a figure corresponding to Figure 2, but where the transformation function(s) is selected based on further shot parameters and/or further ball parameters, is a multidimensional space spanned by shot and/or ball parameters and the functional value(s) is/are associated with the transformation function(s).

### Action A170

The managing module 110 provides, e.g. sends, makes accessible, or the like, the transformed trace 3 for outputting on the display device 120.

### Action A180

The managing module 110 can send the transformed trace 3 to the display device 120, thereby presenting, e.g. to a golfer, a viewer, a user, an instructor, a golf pro, or the like, a graphical representation of the golf shot, e.g. in the form of the transformed trace 3.

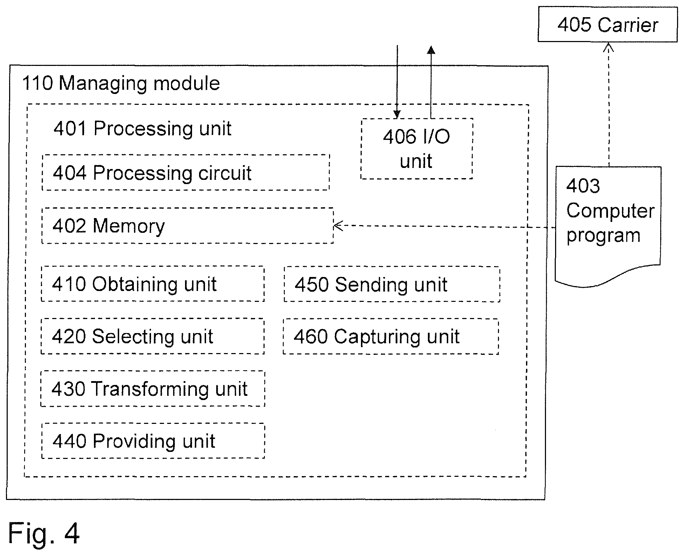

With reference to Figure 4, a schematic block diagram of embodiments of the managing module 110 of Figure 1 is shown.

The managing module 110 may comprise a processing unit 401, such as a means for performing the methods described herein. The means can be embodied in the form of one or more hardware units and/or one or more software units. The term "unit" may thus refer to a circuit, a software block or the like according to various embodiments as described below.

The managing module 110 may further comprise a memory 402. The memory may comprise, such as contain or store, instructions, e.g. in the form of a computer program 403, which may comprise computer readable code units.

According to some embodiments herein, the managing module 110 and/or the processing unit 401 comprises a processing circuit 404 as an exemplifying hardware unit, which may comprise one or more processors. Accordingly, the processing unit 401 may be embodied in the form of, or 'realized by', the processing circuit 404. The instructions may be executable by the processing circuit 404, whereby the managing module 110 is operative to perform the methods of Figure 3. As another example, the instructions, when executed by the managing module 110 and/or the processing circuit 404, may cause the managing module 110 to perform the method according to Figure 3.

In view of the above, in one example, there is provided a managing module 110 for managing a captured trace 2 of a golf ball 1. Again, the memory 402 contains the instructions executable by said processing circuit 404 whereby the managing module 110 is operative for: obtaining a set of shot parameters relating to a shot of the golf ball 1 represented by the captured trace 2; selecting at least one transformation function from among a plurality of transformation functions based on: a set of ball parameters relating to physical properties of the golf ball 1, e.g. associated with the captured trace 2,the set of shot parameters, and a plurality of intervals related to the set of shot parameters, wherein each transformation function of the plurality of transformation functions is associated with a respective interval for at least one of the shot parameters, i.e. of the set of shot parameters, and with at least one respective ball parameter of the set of ball parameters, wherein the plurality of intervals comprises the respective interval for each transformation function; transforming the captured trace 2 according to said at least one transformation function to obtain a transformed trace 3; and providing the transformed trace 3 for outputting on a display device 120.

Figure 4 further illustrates a carrier 405, or program carrier, which provides, such as comprises, mediates, supplies and the like, the computer program 403 as described directly above. The carrier 405 may be one of an electronic signal, an optical signal, a radio signal and a computer readable medium.

In some embodiments, the managing module 110 and/or the processing unit 401 may comprise one or more of an obtaining unit 410, a selecting unit 420, a transforming unit 430, a providing unit 440, a sending unit 450, and a capturing unit 460 as exemplifying hardware units. The term "unit" may refer to a circuit when the term "unit" refers to a hardware unit. In other examples, one or more of the aforementioned exemplifying hardware units may be implemented as one or more software units.

Moreover, the managing module 110 and/or the processing unit 401 may comprise an Input/Output unit 406, which may be exemplified by the receiving unit and/or the sending unit when applicable.

Accordingly, the managing module 110 is configured for managing a captured trace 2 of a golf ball 1.

Therefore, according to the various embodiments described above, the managing module 110 and/or the processing unit 401 and/or the obtaining unit 410 is configured for obtaining a set of shot parameters relating to a shot of the golf ball 1 represented by the captured trace 2.

The managing module 110 and/or the processing unit 401 and/or the selecting unit 420 is configured for selecting at least one transformation function from among a plurality of transformation functions based on: a set of ball parameters relating to physical properties of the golf ball 1, e.g. Associated with the captured trace 2, the set of shot parameters, and a plurality of intervals related to the set of shot parameters. Each transformation function of the plurality of transformation functions is associated with a respective interval for at least one of the shot parameters, i.e. Of the set of shot parameters, and with at least one respective ball parameter of the set of ball parameters. The plurality of intervals comprises the respective interval for each transformation function.

The managing module 110 and/or the processing unit 401 and/or the transforming unit 430 is configured for transforming the captured trace 2 according to said at least one transformation function to obtain a transformed trace 3.

The managing module 110 and/or the processing unit 401 and/or the providing unit 440 is configured for providing the transformed trace 3 for outputting on a display device 120.

In some embodiments, the transformation A160 of the captured trace 2 comprises calculating the transformed trace 3 based on a respective transformed trace 3 for each transformation function of said at least one transformation function.

In some embodiments, the transformation A160 of the trace comprises calculating the transformed trace 3 as an average, a weighted average, a min, a max, and/or a median of the respective transformed trace 3 for said each transformation function.

In some embodiments, a sub-group of the plurality of intervals is associated with one of the shot parameters. The intervals of the sub-group are consecutively following each other.

In some embodiments, two adjacent points of two consecutive intervals of the plurality of intervals, one of the points belonging to one of the two consecutive intervals and the other point belonging to the other one of the two consecutive intervals, are constrained by a condition that the values of the transformation functions match, such as are equal.

In some embodiments, two adjacent points of two consecutive intervals of the plurality of intervals, one of the points belonging to one of the two consecutive intervals and the other point belonging to the other one of the two consecutive intervals, are constrained by a condition that the derivate values of the transformation functions match, such as are equal.

The managing module 110 and/or the processing unit 401 and/or the sending unit 450 may be configured for sending the transformed trace 3 to the display device 120, thereby presenting, e.g. to a viewer/user, a graphical representation of the golf shot.

In some embodiments, the set of ball parameters comprises at one or more of: a type of the golf ball 1, a dimple pattern of the golf ball 1, an indication about compression properties of the golf ball 1, a cover material of the golf ball 1, a weight of the golf ball 1, a size of the golf ball 1, or the like.

In some embodiments, the transformation function comprises a scaling function, such as a constant or varying function, or the like.

The managing module 110 and/or the processing unit 401 and/or the obtaining unit 410 may be configured for obtaining the plurality of transformation functions.

The managing module 110 and/or the processing unit 401 and/or the obtaining unit 410 may be configured for obtaining the set of ball parameters.

The managing module 110 and/or the processing unit 401 and/or the obtaining unit 410 may be configured for obtaining the captured trace 2, e.g. from a tracing module 130.

The managing module 110 and/or the processing unit 401 and/or the capturing unit 460 may be configured for capturing, by a launch monitor 140, the shot to obtain the set of shot parameters by use of image analysis.

As used herein, the term "sub" as in sub-set, sub-group or the like can refer to the whole group or a proper subset thereof. It is thus herein distinguished between subset and proper subsets. A proper subset can be defined as that "A" is a proper subset of "B" if and only if every element of "A" is also in "B", and there exists at least one element in "B" that is not in "A".

As used herein, the term "unit" may refer to one or more functional units, each of which may be implemented as one or more hardware units and/or one or more software units and/or a combined software/hardware unit in a node. In some examples, the unit may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing unit" can include one or more hardware units, one or more software units or a combination thereof.

As used herein, the term "software unit" may refer to a software application, a Dynamic Link Library (DLL), a software component, a software module, a software object, a React component, an object according to Component Object Model (COM), a software function, a software engine, an executable binary software file or the like.

The terms "processing unit" or "processing circuit" may herein comprise one or more processors, an Application Specific Integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a Digital Versatile Disc (DVD), a Blu-ray disc, a software unit that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

## Claims

1. A method, performed by a managing module (110), for managing a captured trace (2) of a golf ball (1), wherein the method comprises:
obtaining (A130) a set of shot parameters relating to a shot of the golf ball (1) represented by the captured trace (2),
selecting (A150) at least one transformation function from among a plurality of transformation functions based on:
a set of ball parameters relating to physical properties of the golf ball (1),
the set of shot parameters, and
a plurality of intervals related to the set of shot parameters,
**characterised in that**
each transformation function of the plurality of transformation functions is associated with a respective interval for at least one of the shot parameters, i.e. of the set of shot parameters, and with at least one respective ball parameter of the set of ball parameters, wherein the plurality of intervals comprises the respective interval for each transformation function,
transforming (A160) the captured trace (2) according to said at least one transformation function to obtain a transformed trace (3), and
providing (A170) the transformed trace (3) for outputting on a display device (120).

2. The method according to claim 1, wherein the transformation (A160) of the captured trace (2) comprises calculating the transformed trace (3) based on a respective transformed trace (3) for each transformation function of said at least one transformation function.

3. The method according to the preceding claim, wherein the transformation (A160) of the trace comprises calculating the transformed trace (3) as an average, a weighted average, a min, a max, and/or a median of the respective transformed trace (3) for said each transformation function.

4. The method according to any one of the preceding claims, wherein a sub-group of the plurality of intervals is associated with one of the shot parameters, wherein the intervals of the sub-group are consecutively following each other.

5. The method according to any one of preceding claims, wherein two adjacent points of two consecutive intervals of the plurality of intervals, one of the points belonging to one of the two consecutive intervals and the other point belonging to the other one of the two consecutive intervals, are constrained by a condition that the values of the transformation functions match.

6. The method according to claim 4 or 5, wherein two adjacent points of two consecutive intervals of the plurality of intervals, one of the points belonging to one of the two consecutive intervals and the other point belonging to the other one of the two consecutive intervals, are constrained by a condition that the derivate values of the transformation functions match.

7. The method according to any one of the preceding claims, wherein the providing (A170) of the transformed trace (3) comprises sending (A180) the transformed trace (3) to the display device (120), thereby presenting a graphical representation of the golf shot.

8. The method according to any one of the preceding claims, wherein the set of ball parameters comprises at one or more of: a type of the golf ball (1), a dimple pattern of the golf ball (1), an indication about compression properties of the golf ball (1), a cover material of the golf ball (1), a weight of the golf ball (1), and a size of the golf ball (1).

9. The method according to any one of the preceding claims, wherein the transformation function comprises a scaling function.

10. The method according to any one of the preceding claims, wherein the method comprises obtaining (A140) the plurality of transformation functions.

11. The method according to any one of the preceding claims, wherein the method comprises obtaining (A110) the set of ball parameters.

12. The method according to any one of the preceding claims, wherein the method comprises obtaining (A120) the captured trace (2).

13. The method according to any one of the preceding claims, wherein the obtaining (A130) of the set of shot parameters comprises capturing (A135), by a launch monitor (140), the shot to obtain the set of shot parameters by use of image analysis.

14. A managing module (110) configured to perform the method according to any one of the preceding claims.

15. A computer program (403), comprising computer readable code units which when executed on a managing module (110) causes the managing module (110) to perform the method according to any one of claims 1-13.

## Patentansprüche

1. Verfahren, ausgeführt von einem Verwaltungsmodul (110) zum Verwalten einer erfassten Bahn (2) eines Golfballs (1), wobei das Verfahren umfasst:
Erhalten (A130) einer Menge von Schlagparametern, die sich auf einen Schlag des Golfballs (1) beziehen, der durch die erfasste Bahn (2) dargestellt wird,
Auswählen (A150) mindestens einer Transformationsfunktion aus einer Vielzahl von Transformationsfunktionen auf der Grundlage von:
einer Menge von Ballparametern, die sich auf physikalische Eigenschaften des Golfballs (1) beziehen,
der Menge von Schlagparametern und
einer Vielzahl von Intervallen, die sich auf die Menge von
Schlagparametern beziehen,
**dadurch gekennzeichnet, dass** jede Transformationsfunktion aus der Vielzahl von Transformationsfunktionen einem jeweiligen Intervall für mindestens einen der Schlagparameter, d. h. der Menge von Schlagparametern, und mindestens einem jeweiligen Ballparameter aus der Menge von Ballparametern zugeordnet ist,
wobei die Vielzahl von Intervallen das jeweilige Intervall für jede Transformationsfunktion umfasst,
Transformieren (A160) der erfassten Bahn (2) gemäß der mindestens einen Transformationsfunktion, um eine transformierte Bahn (3) zu erhalten, und Bereitstellen (A170) der transformierten Bahn (3) zum Ausgeben auf einer Anzeigevorrichtung (120).

2. Verfahren nach Anspruch 1, wobei die Transformation (A160) der erfassten Bahn (2) ein Berechnen der transformierten Bahn (3) auf der Grundlage einer jeweiligen transformierten Bahn (3) für jede Transformationsfunktion der mindestens einen Transformationsfunktion umfasst.

3. Verfahren nach dem vorstehenden Anspruch, wobei die Transformation (A160) der Bahn ein Berechnen der transformierten Bahn (3) als ein Mittelwert, ein gewichteter Mittelwert, ein Minimalwert, ein Maximalwert und/oder ein Median der jeweiligen transformierten Bahn (3) für jede Transformationsfunktion umfasst.

4. Verfahren nach einem der vorstehenden Ansprüche, wobei eine Untergruppe der Vielzahl von Intervallen einem der Schlagparameter zugeordnet ist, wobei die Intervalle der Untergruppe aufeinanderfolgend aufeinander folgen.

5. Verfahren nach einem der vorstehenden Ansprüche, wobei zwei benachbarte Punkte zweier aufeinanderfolgender Intervalle der Vielzahl von Intervallen - wobei einer der Punkte zu einem der beiden aufeinanderfolgenden Intervalle gehört und der andere Punkt zu dem anderen der beiden aufeinanderfolgenden Intervalle gehört - durch eine Bedingung eingeschränkt sind, dass die Werte der Transformationsfunktionen übereinstimmen.

6. Verfahren nach Anspruch 4 oder 5, wobei zwei benachbarte Punkte zweier aufeinanderfolgender Intervalle der Vielzahl von Intervallen - wobei einer der Punkte zu einem der beiden aufeinanderfolgenden Intervalle gehört und der andere Punkt zu dem anderen der beiden aufeinanderfolgenden Intervalle gehört - durch die Bedingung eingeschränkt sind, dass die Ableitungswerte der Transformationsfunktionen übereinstimmen.

7. Verfahren nach einem der vorstehenden Ansprüche, wobei das Bereitstellen (A170) der transformierten Bahn (3) ein Senden (A180) der transformierten Bahn (3) an die Anzeigevorrichtung (120) umfasst, wodurch eine grafische Darstellung des Golfschlags dargestellt wird.

8. Verfahren nach einem der vorstehenden Ansprüche, wobei die Menge von Ballparametern eines oder mehrere der folgenden Elemente umfasst: einen Typ des Golfballs (1), ein Dimple-Muster des Golfballs (1), eine Angabe zu Kompressionseigenschaften des Golfballs (1), ein Hüllenmaterial des Golfballs (1), ein Gewicht des Golfballs (1) und eine Größe des Golfballs (1).

9. Verfahren nach einem der vorstehenden Ansprüche, wobei die Transformationsfunktion eine Skalierungsfunktion umfasst.

10. Verfahren nach einem der vorstehenden Ansprüche, wobei das Verfahren ein Erhalten (A140) der Vielzahl von Transformationsfunktionen umfasst.

11. Verfahren nach einem der vorstehenden Ansprüche, wobei das Verfahren ein Erhalten (A110) der Menge von Ballparametern umfasst.

12. Verfahren nach einem der vorstehenden Ansprüche, wobei das Verfahren das Erhalten (A120) der erfassten Bahn (2) umfasst.

13. Verfahren nach einem der vorstehenden Ansprüche, wobei das Erhalten (A130) der Menge von Schlagparametern ein Erfassen (A135) des Schlags durch einen Abschlagmonitor (140) umfasst, um die Menge von Schlagparametern unter Verwendung einer Bildanalyse zu erhalten.

14. Verwaltungsmodul (110), das dazu konfiguriert ist, das Verfahren gemäß einem der vorstehenden Ansprüche auszuführen.

15. Computerprogramm (403), das computerlesbare Codeeinheiten umfasst, die bei ihrer Ausführung auf einem Verwaltungsmodul (110) bewirken, dass das Verwaltungsmodul (110) das Verfahren gemäß einem der Ansprüche 1-13 ausführt.

## Revendications

1. Procédé, mis en œuvre par un module de gestion (110), destiné à gérer une trace capturée (2) d'une balle de golf (1), dans lequel le procédé comprend :
l'obtention (A130) d'un ensemble de paramètres de coup liés à un coup de la balle de golf (1) représenté par la trace capturée (2),
la sélection (A150) d'au moins une fonction de transformation parmi une pluralité de fonctions de transformation sur la base :
d'un ensemble de paramètres de balle liés à des propriétés physiques de la balle de golf (1),
de l'ensemble de paramètres de coup, et
d'une pluralité d'intervalles liés à l'ensemble de paramètres de coup,
**caractérisé en ce que**
chaque fonction de transformation de la pluralité de fonctions de transformation est associée à un intervalle respectif pour au moins un des paramètres de coup, c'est-à-dire de l'ensemble de paramètres de coup, et à au moins un paramètre de balle respectif de l'ensemble de paramètres de balle, dans lequel la pluralité d'intervalles comprend l'intervalle respectif pour chaque fonction de transformation,
la transformation (A160) de la trace capturée (2) selon ladite au moins une fonction de transformation afin d'obtenir une trace transformée (3), et
la fourniture (A170) de la trace transformée (3) pour la produire sur un dispositif d'affichage (120).

2. Procédé selon la revendication 1, dans lequel la transformation (A160) de la trace capturée (2) comprend le calcul de la trace transformée (3) sur la base d'une trace transformée (3) respective pour chaque fonction de transformation de ladite ou desdites fonctions de transformation.

3. Procédé selon la revendication précédente, dans lequel la transformation (A160) de la trace comprend le calcul de la trace transformée (3) sous la forme d'une moyenne, d'une moyenne pondérée, d'une valeur minimale, d'une valeur maximale et/ou d'une médiane de la trace transformée (3) respective pour chacune desdites fonctions de transformation.

4. Procédé selon l'une quelconque des revendications précédentes, dans lequel un sous-groupe de la pluralité d'intervalles est associé à l'un des paramètres de coup, dans lequel les intervalles du sous-groupe se suivent de manière consécutive.

5. Procédé selon l'une quelconque des revendications précédentes, dans lequel deux points adjacents de deux intervalles consécutifs de la pluralité d'intervalles, l'un des points appartenant à l'un des deux intervalles consécutifs et l'autre point appartenant à l'autre des deux intervalles consécutifs, sont soumis à une condition selon laquelle les valeurs des fonctions de transformation concordent.

6. Procédé selon la revendication 4 ou 5, dans lequel deux points adjacents de deux intervalles consécutifs de la pluralité d'intervalles, l'un des points appartenant à l'un des deux intervalles consécutifs et l'autre point appartenant à l'autre des deux intervalles consécutifs, sont soumis à une condition selon laquelle les valeurs dérivées des fonctions de transformation concordent.

7. Procédé selon l'une quelconque des revendications précédentes, dans lequel la fourniture (A170) de la trace transformée (3) comprend l'envoi (A180) de la trace transformée (3) au dispositif d'affichage (120), présentant ainsi une représentation graphique du coup de golf.

8. Procédé selon l'une quelconque des revendications précédentes, dans lequel l'ensemble de paramètres de balle comprend un ou plusieurs parmi : un type de la balle de golf (1), un motif d'alvéoles de la balle de golf (1), une indication concernant les propriétés de compression de la balle de golf (1), un matériau de revêtement de la balle de golf (1), un poids de la balle de golf (1) et une taille de la balle de golf (1).

9. Procédé selon l'une quelconque des revendications précédentes, dans lequel la fonction de transformation comprend une fonction de mise à l'échelle.

10. Procédé selon l'une quelconque des revendications précédentes, dans lequel le procédé comprend l'obtention (A140) de la pluralité de fonctions de transformation.

11. Procédé selon l'une quelconque des revendications précédentes, dans lequel le procédé comprend l'obtention (A110) de l'ensemble de paramètres de balle.

12. Procédé selon l'une quelconque des revendications précédentes, dans lequel le procédé comprend l'obtention (A120) de la trace capturée (2).

13. Procédé selon l'une quelconque des revendications précédentes, dans lequel l'obtention (A130) de l'ensemble de paramètres de coup comprend la capture (A135) du coup par un moniteur de lancement (140) afin d'obtenir l'ensemble de paramètres de coup à l'aide d'une analyse d'images.

14. Module de gestion (110) configuré pour mettre en œuvre le procédé selon l'une quelconque des revendications précédentes.

15. Programme informatique (403) comprenant des unités de code lisibles par ordinateur qui, lorsqu'elles sont exécutées sur un module de gestion (110), amènent le module de gestion (110) à mettre en œuvre le procédé selon l'une quelconque des revendications 1 à 13.
